# EUROPÄISCHE PATENTSCHRIFT

(11) **EP 1 621 524 B1**
(45) Veröffentlichungstag und Bekanntmachung des Hinweises auf die Patenterteilung: **06.01.2010**
(21) Anmeldenummer: 05012404.9
(22) Anmeldetag: 09.06.2005
(51) Int. Cl.: C03B 40/02

(54) **Beschichtungmaterial für eine Glasform, Verfahren zum Beschichten einer Glasform sowie beschichtete Glasform**
Material for coating a glass mould, method for coating a glass mould and coated mould
Matériau de revêtement d'un moule verrier, méthode pour revêtir un moule verrier et moule ainsi revêtu

(30) Priorität: 27.07.2004 DE 102004036343
(43) Veröffentlichungstag der Anmeldung: 01.02.2006
(73) Patentinhaber: IPGR International Partners in Glass Research, 6330 Cham (Kanton Zug) (CH)
(72) Erfinder: Schramm, Manfred, Dr., 96369 Hummendorf (DE)
(74) Vertreter: Blaumeier, Jörg

(56) Entgegenhaltungen:
- GB-A- 1 532 693
- US-A- 4 360 563
- PATENT ABSTRACTS OF JAPAN Bd. 012, Nr. 462 (C-549), 5. Dezember 1988 (1988-12-05) & JP 63 182237 A (DENKI KAGAKU KOGYO KK), 27. Juli 1988 (1988-07-27)

## Beschreibung

Die Erfindung betrifft ein Beschichtungsmaterial für eine Glasform, insbesondere eine Vorform.

Die Produktion von Behälterglas wie Flaschen oder Konservengläsern geschieht in der Regel in einem zweistufigen Prozess an einer Glasmaschine. Ein Tropfen aus geschmolzenem Glas wird durch ein Rinnensystem zu den einzelnen Produktionsstationen geführt, wo er in die sogenannte Vorform fällt. Diesen Vorgang bezeichnet man als Ladung. Dort wird das sogenannte Külbel mit der bereits fertigen Mündung des Behälters geformt. Nach der Übergabe in die Fertigform wird die Flasche zu ihrer endgültigen Form aufgeblasen. Die Entformung und Ausgabe auf das Maschinenlaufband beschließt den Formgebungsprozess. Bei der Tropfenladung ist es wichtig, dass der Tropfen nicht durch Reibung an der Formenwand deformiert wird und Ladungsfalten entstehen.

Um dies zu gewährleisten wird üblicherweise eine Glasform, insbesondere eine solche Vorform mit einem Entformungsmittel behandelt, welche Behandlung unter dem Begriff "Schmieren" geläufig ist. Hierbei wird eine Schmiermittelzusammensetzung bestehend aus einem Träger auf Mineralölbasis und einem Schmiermittel wie Schwefel oder Graphit in einem regelmäßigen Abstand zwischen fünf und fünfundvierzig Minuten manuell in die Form gestrichen. Das Schmiermittelgemisch ermöglicht eine gute Tropfenladung wie auch eine gute Entformung ohne Rissbildung an der Glasoberfläche. Gleichzeitig wird die Oberfläche der Form vor korrosiven Angriffen durch das geschmolzene Glas geschützt.

Ein solches Vorgehen ist bereits aus dem Grund nachteilig, als es manuell erfolgt, mithin also sehr aufwändig ist. Auch der Schmierzyklus ist relativ hoch, das heißt, eine Form ist sehr häufig zu schmieren. Auch ist die Gleichmäßigkeit des Schichtauftrags nicht gewährleistet. Weiterhin verkokt das Trägermaterial des Schmiermittels im Hinblick auf die hohen Formtemperaturen, was aus Arbeitsschutzgründen für den Maschinenführer nachteilig ist.

Eine weitere Möglichkeit der Formbehandlung ist aus WO 98/57804 bekannt. Dort ist die Beschichtung der Form mit einer semi-permanenten keramischen oder keramikartigen Beschichtung, hervorgehend aus Al-Pulver als Füllstoff und einem anorganischen Bindemittel bestehend aus einer wässrigen Lösung aus CrO₃ und H₃PO₄ bekannt. Der Schichtaufbau besteht aus wenigstens zwei diskreten Schichten, einem sogenannten Base Coat, der den pseudo-keramischen Unterbau bildet, und einem sogenannten Top Coat, der den Festkörperschmierstoff, z. B. in Form von Graphit, BN oder MoS₂ enthält. Der Base Coat bildet eine harte, strukturierte Basisschicht, auf der der Top Coat gut haftet. Insgesamt verfügt der Schichtaufbau über eine höhere Härte, Haftung und Abriebfestigkeit, als dies bei einer einstufigen Beschichtung der Fall wäre.

Problematisch bei dieser Beschichtung ist jedoch das anorganische Bindemittel, das zum größten Teil aus Chrom-VI-Oxid und Phosphorsäure besteht. Die Kombination dieser beiden Chemikalien ist hochgiftig, umweltschädlich, ätzend, oxidierend und krebserregend. Aus diesem Grund ist der Anwender gezwungen, ausreichende Sicherheitsmaßnahmen hinsichtlich des Arbeitsschutzes wie auch des Umweltschutzes vorzusehen. Gleichwohl ist bei einem Arbeiter, der mit dem Aufbringen der Beschichtung betraut ist, die Arbeitsplatzbelastung durch Chrom erhöht.

Aus US 4,360,563 ist ein Beschichtungsmaterial bekannt, bei dem aus Haftgründen zunächst eine Haftvermittlerschicht, ein sogenannter Primer, aufgebracht wird, bei dem es sich in an sich bekannter Weise um ein Silikonharz handelt. Diese Haftvermittlerschicht dient lediglich der Haftvermittlung zur zweiten Schicht, die erst dann aufgetragen wird, wenn die Primer-Schicht getrocknet ist. Es handelt sich dort also um ein bekanntes "Einschichtsystem".

Ferner ist aus Patent Abstract of Japan, Band 012, Nr. 462, Zusammenfassung aus JP-A-63182237 eine Formbeschichtungsmasse bekannt, die aus 2 - 30 % einer pulvrigen Komponente und 98 - 70 % einer flüssigen Komponente besteht. Die pulvrige Komponente enthält 70 - 95 Gew.% Feinpulveranteil von Bonitrid, Graphit, Molybdändisulfit, Talk und Kohlenstoff mit einem Partikeldurchmesser ≤ 1µ. Die flüssige Komponente enthält 10 - 60 Gew.% Silikonharz, ferner ein organisches Lösungsmittel und ein Restanteil.

Ferner ist aus GB-A-1532693 ein Glasverarbeitungselement bekannt, das zumindest an seiner Kontaktfläche aus hochorientiertem pyrolytischem Graphit besteht.

Der Erfindung liegt damit das Problem zugrunde, ein Beschichtungsmaterial anzugeben, das einerseits ungefährlich ist, andererseits ein störungsfreies Einbringen des Glastropfens wie auch eine Entformung des Külbels zulässt.

Zur Lösung des Problems ist ein Beschichtungsmaterial für eine Glasform, insbesondere eine Vorform, vorgesehen, bestehend aus
a) einer direkt auf die Glasform aufzubringenden ersten Beschichtungsmasse enthaltend
   - ein bei gegenüber Raumtemperatur erhöhter Temperatur aushärtbares Bindemittel auf Siliconharzbasis zur Bildung einer Siliconharzträgerschicht, und
   - einen während der Aushärtung oxidierbaren, in die Siliconharzmatrix einzubindenden Füllstoff, der nach der Oxidation einen keramischen Bestandteil in der aus der ersten Beschichtungsmasse gebildeten keramischen Schicht bildet,
   - wobei das Bindmittel und der Füllstoff in einem Lösungsmittel gelöst bzw. suspendiert sind, und aus
b) einer auf die erste Beschichtungsmasse aufzubringenden zweiten Beschichtungsmasse enthaltend
   - ein bei gegenüber Raumtemperatur erhöhter Temperatur aushärtbares Bindemittel auf Siliconharzbasis zur Bildung einer Siliconharzträgerschicht, und
   - einen bei der Aushärtung in die Siliconharzträgerschicht einzubindenden, bezüglich der mit dieser Beschichtungslage in Kontakt kommenden Glasmasse schmierend wirkenden Schmierstoff,
   - wobei das Bindmittel und der Schmierstoff in einem Lösungsmittel gelöst bzw. suspendiert sind.

Das erfindungsgemäße Beschichtungsmaterial zeichnet sich durch zwei verschiedenen Beschichtungsmassen aus, die zur Bildung eines Base Coats oder einer Basisschichtung und eines Top Coats oder einer oberseitigen Beschichtung dienen. Jedoch kommt bei beiden Beschichtungsmassen ein Bindemittel auf Siliconharzbasis zum Einsatz, das bei erhöhter Temperatur aushärtet und einen Art Hochtemperaturlack bildet. Siliconharz ist ungiftig, nicht ätzend und auch sonst nicht schädlich, bildet aber gleichwohl eine hinreichend stabile Matrix, in die die jeweils zugemischten Bestandteile der jeweiligen Masse fest eingebunden werden können. Die erste Beschichtungsmasse bildet eine sehr harte Base-Coat-Schicht, in der der oxidierte Füllstoff, bevorzugt Al-Pulver, das während des Härtens zu Al₂O₃ oxidiert wird, einen harten, keramischen Bestandteil bildet, so dass sich insgesamt der Base Coat als keramische oder keramikartige Schicht ausbildet.

Die zweite Beschichtungsmasse, die zweckmäßigerweise ein identisches Bindemittel auf Siliconharzbasis umfasst, bildet den Top Coat, auch hier wird eine hinreichend feste Siliconharzmatrixschicht gebildet, in der der Schmierstoff ebenfalls hinreichend fest eingebunden ist. Im Bereich der Grenzfläche fließen beide Füllmaterialien, also der Füllstoff aus der ersten Beschichtungsmasse und der Schmierstoff aus der zweiten Beschichtungsmasse etwas in die jeweilige gegenüberliegende Schicht, so dass sich insgesamt ein sicherer Schichtverbund ausbildet.

Das erfindungsgemäße Beschichtungsmaterial kann ohne die eingangs beschriebenen Nachteile, wie sie aus der Beschichtung gemäß WO 98/57804 bekannt sind, appliziert werden. Während des Aufbringens dampft allenfalls etwas Lösungsmittel ab, welches während des nachfolgenden Temperierungsschritts zum Einbrennen der Siliconharzmatrix gänzlich abdampft. Das heißt, die Einstufung in die Gefahrstoffklasse hängt lediglich von der Art des verwendeten Lösungsmittels ab. Als Lösungsmittel der ersten Beschichtungsmasse wird bevorzugt Butylacetat verwendet, das Lösungsmittel der zweiten Beschichtungsmasse kann ebenfalls Butylacetat oder eine Mischung aus Butylacetat und Butylglycol sein. Letzteres ist dahingehend von Vorteil, als die Zumischung von Butylglycol während des Härtens und damit des Aushärtens der Schichten die zweite Beschichtungsmasse etwas länger flüssig oder viskos hält, nachdem Butylglycol einen etwas höheren Siedepunkt hat, was es ermöglicht, dass das Schmiermittel etwas besser in die darunter liegende Beschichtungslage eindiffundieren kann.

Als Füllstoff kann wie beschrieben beispielsweise Aluminium-Pulver verwendet werden, das während des Härtens über den Luftsauerstoff als ausschließliches Oxidationsmittel zu Al₂O₃ oxidiert wird. Diese AlO₃-Partikel werden fest in die Siliconharzmatrix eingelagert, so dass sich eine keramik-ähnliche Basisschicht ausbildet, die sehr hart ist und infolge ihrer Oberflächenstrukturierung eine sehr gute, raue und poröse Oberfläche mit einer guten Haftung für den Top Coat bildet.

Als Schmierstoffe werden bevorzugt Graphit, MoS₂, BN oder Flammruß verwendet. An dieser Stelle ist darauf hinzuweisen, dass die Aufzählung der verwendbaren Füll- oder Schmierstoffe nicht abschließend ist, selbstverständlich ist es denkbar, andere Stoffe zu verwenden, sofern dies zweckmäßig ist.

Die erste Beschichtungsmasse kann erfindungsgemäß bezogen auf 100g enthalten:
- Bindemittel 15 - 35g
- Füllstoff 23,5 - 53,5g
- Rest Lösungsmittel,
während die zweite Beschichtungsmasse bezogen auf 100g enthaltend kann:
- Bindemittel 15 - 35g
- Schmierstoff 15 - 35g
- Rest Lösungsmittel.

Bevorzugt enthält die erste Beschichtungsmasse bezogen auf 100g:
- Bindemittel 20 - 30g
- Füllstoff 30 - 45g
- Rest Lösungsmittel,
während die zweite Beschichtungsmasse bezogen auf 100g enthält:
- Bindemittel 20 - 40g
- Schmiermittel 20 - 30g
- Rest Lösungsmittel.

Eine besonders vorteilhafte Ausgestaltung sieht vor, dass die erste Beschichtungsmasse bezogen auf 100g enthält:
- Bindemittel 23 - 28g
- Füllstoff 35 - 43g
- Rest Lösungsmittel,
während die zweite Beschichtungsmasse bezogen auf 100g enthält:
- Bindemittel 22 - 27g
- Schmierstoff 22 - 27g
- Res,t Lösungsmittel.

In einer konkreten Efindungsausgestaltung enthält die Beschichtungsmasse bezogen auf 100g:
- Bindemittel 26,3g
- Füllstoff 40,5g
- Rest Lösungsmittel,
während die zweite Beschichtungsmasse bezogen auf 100g enthält:
- Bindemittel 23,8g
- Schmierstoff 23,8g
- Rest Lösungsmittel.

Wird als Lösungsmittel für die zweite Beschichtungsmasse Butylacetat und Butylglycol verwendet, so sollten diese im Verhältnis 1:1 oder mit einem leichten Butylglycol-Überschuss bemessen werden.

In Weiterbildung des Erfindungsgedankens kann vorgesehen sein, dass die erste und/oder die zweite Beschichtungsmasse einen gelösten oder suspendierten Farbstoff enthält. Dies ist dahingehend von Vorteil, als beim Aufbringen der Schicht optisch überprüft werden kann, ob die Vorform an ihrer gesamten zu beschichteten Fläche sowohl mit der ersten Beschichtungsmasse wie auch der zweiten Beschichtungsmasse belegt ist, die eingesetzten Farbstoffe beider Beschichtungsmassen sind zweckmäßigerweise von der Farbe her unterschiedlich. Die Farbstoffe können beliebiger Natur sein, selbstverständlich sollen sie ebenfalls vollkommen unschädlich auch während des Härtens der Form sein, die Zugabemenge liegt je nach gewünschtem Einfärbungsgrad im Bereich weniger Gramm. Die Menge ist auf die angegebenen Massenzusammensetzungen pro 100 Gramm aufzuschlagen.

Neben dem Beschichtungsmaterial selbst betrifft die Erfindung ferner ein Verfahren zum Beschichten einer Glasform, insbesondere einer Glasvorform, unter Verwendung eines Beschichtungsmaterials der vorbeschriebenen Art, mit folgenden Schritten:
- Bildung einer ersten Schicht durch Auftragen der ersten Beschichtungsmasse auf die Formwand,
- Bildung einer zweiten Schicht durch Auftragen der zweiten Beschichtungsmasse auf die Schicht der ersten Beschichtungsmasse,
- Aushärten der Beschichtungsmassen zur Bildung der Beschichtung durch Einbrennen der Form, wobei die Form bei einer Haltetemperatur von mindestens 500°C für mindestens 60 min ausgeheizt wird; derart, dass ein in der ersten Beschichtungsmasse enthaltener oxidierbarer Füllstoff während der Aushärtung oxidiert wird und einen keramischen Bestandteil in der aus der ersten Beschichtungsmasse gebildeten keramikartigen Schicht bildet.

Die erste und/oder die zweite Schicht werden bevorzugt durch zweimaliges Auftragen der ersten und/oder zweiten Beschichtungsmasse gebildet, wobei bevorzugt die erste Beschichtungsmasse, die den Base Coat bildet, zwei- oder mehrfach aufgetragen wird.

Der Auftrag der ersten Beschichtungsmasse und der zweiten Beschichtungsmasse - gegebenenfalls bei Mehrfachbeschichtung jeder einzelne Auftrag - sollte in einer Schichtstärke zwischen 40 - 150 µm, insbesondere zwischen 50 - 100 µm, vorzugsweise zwischen 60 - 80 µm erfolgen und vorzugsweise möglichst homogen sein. Die Aufbringung erfolgt bevorzugt durch Aufsprühen unter Verwendung einer Lackiersprühpistole. Die oben angegebenen Zusammensetzungen ermöglichen die Herstellung hinreichend flüssiger Beschichtungsmassen, die ein Aufsprühen zulassen. Vor dem Aufsprühen sind die Beschichtungsmassen, die vorgemischt und problemlos bei Raumtemperatur gelagert werden können, aufzuschütteln, um einen möglichen Bodensatz zu verteilen. Jedoch ist auch ein manueller Auftrag möglich, nachdem die Formen sehr lange Standzeiten erreichen und die Beschichtung im ausgebauten Zustand sorgfältig möglich ist.

Die Schichten werden nass-in-nass aufeinander aufgetragen, das heißt, die erste Schicht wird vor dem Auftragen der zweiten Schicht nicht ausgehärtet, vielmehr reicht es aus, wenn die erste Schicht vor dem Auftragen der zweiten Schicht et was antrocknet. Beide Schichten sind also beim Beginn des Härtens noch nass, so dass die jeweiligen Stoffe auch ohne weiteres zwischen den Schichten diffundieren und das oder die Lösungsmittel abdampfen können.

Das Aushärten selbst erfolgt bevorzugt bei einer Haltetemperatur von mindestens 500°C für mindestens 60 Minuten. Die Temperatur von wenigstens ca. 500°C ist für eine hinreichende Oxidation des Füllstoffs in Form des Aluminium-Pulvers erforderlich. Die Haltezeit für eine hinreichende Oxidation wie auch eine Sicherstellung, dass sämtliches Lösungsmittel ausgetrieben und die Siliconharzmatrix hinreichend ausgebildet ist, sollte wenigstens 60 min, bevorzugt wenigstens 90 min betragen.

Die einzubrennenden Formen sollten bevorzugt nicht in den Ofen eingebracht werden, wenn dieser bereits auf die Haltetemperatur aufgeheizt wird. Die Temperatur beim Einbringen der Formen sollte maximal 200°C, insbesondere maximal 150°C betragen, bevorzugt aber Raumtemperatur, um etwaige Probleme beim Ausbilden der Schichten aufgrund des hohen Temperatursprungs zwischen der Formtemperatur und der Ofeninnentemperatur zu vermeiden. Bevorzugt wird der Ofen, in dem eine Form eingebrannt wird, ausgehend von der Temperatur beim Einbringen der Form mit einer Rate von 5 - 10°C/min auf die Haltetemperatur aufgeheizt.

Die zu beschichtenden Formflächen müssen sauber und fettfrei sein, um eine optimale Haftung insbesondere des Base Coats zu gewährleisten. Zu diesem Zweck werden die Formen vor dem Auftragen der ersten Beschichtungsmasse bevorzugt gereinigt, was beispielsweise durch Sandstrahlen, insbesondere unter Verwendung eines weichen Korns erfolgen sollte. Wird eine Form aus der Glasmaschine entfernt, weil sie erneut zu beschichten ist, sollte die Form bereits unmittelbar nach dem Entfernen aus der Maschine gereinigt, bevorzugt abgelaugt und/oder sandgestrahlt werden, insbesondere unter Verwendung eines harten Korns.

Schließlich betrifft die Erfindung eine Glasform, insbesondere Glasvorform, mit einer unmittelbar auf der Innenfläche der Glasform vorgesehenen keramikartigen Schicht bestehend aus einer ausgehärteten Silikonharzmatrix mit einem eingebetteten oxidierten Füllstoff, vorzugsweise Al₂O₃, sowie einer auf der ersten Schicht vorgesehenen zweiten Schicht bestehend aus einer ausgehärteten Silikonharzmatrix mit darin eingebundenem, fein verteiltem Schmierstoff, vorzugsweise Graphit.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1a, 1b: Prinzipdarstellungen zur Formgebung von Hohlglasgegenständen im Press-Blas-Verfahren (Fig. 1a) und im Blas-Blas-Verfahren(Fig. 1b),
- Fig. 2.: eine Teilansicht einer beschichteten Vorform im Schnitt,
- Fig. 3: ein Diagramm zur Darstellung des Ablaufs zur Beschichtung einer Vorform,
- Fig. 4: eine Darstellung der Laufzeit erfindungsgemäß beschichteter Vorformen bei der Herstellung einer 750ml Bordeaux-Flasche,
- Fig. 5: ein Diagramm zur Darstellung der Wandstärkeverteilung an den hergestellten Flaschen im Bereich der Feederwelle von Flaschen, hergestellt unter Verwendung der erfindungsgemäßen Vorformen, und von Flaschen, hergestellt unter Verwendung von manuell geschmierten Vorformen,
- Fig. 6: ein Diagramm entsprechend Fig. 5 zur Darstellung der Glasdickenverteilung am Flaschenboden, und
- Fig. 7: ein Diagramm zur Darstellung der Laufzeit erfindungsgemäßer Vorformen bei der Herstellung von 250ml Schlegel-Flaschen.

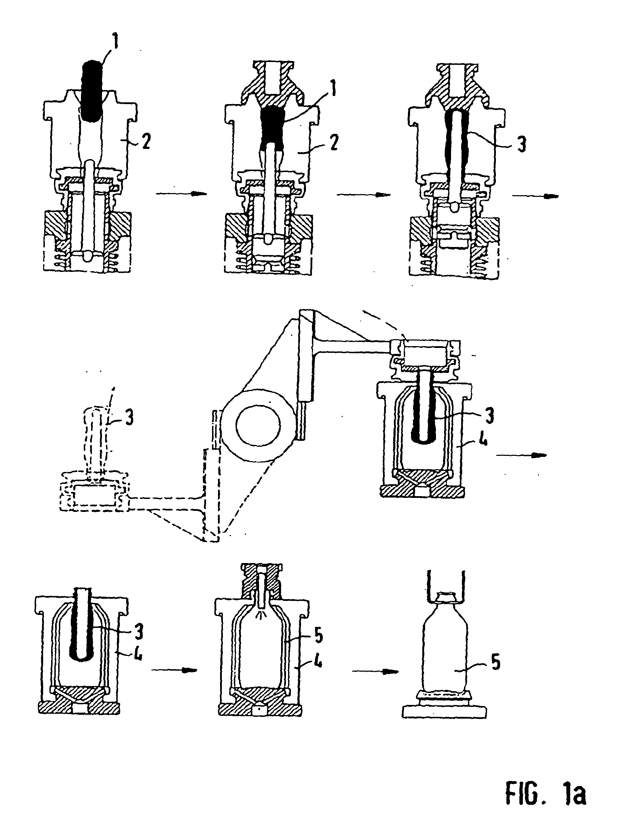

Fig. 1a zeigt in Form einer Prinzipdarstellung die Abläufe zur Herstellung einer Hohlflasche durch einen Press-Blas-Prozess. Beim Press-Blas-Prozess fällt ein Tropfen 1 aus flüssigem Glas in eine Vorform 2. Der Glastropfen 1 wurde über eine nicht näher gezeigte Förderrinne aus der Glasschmelze zugeführt, die Vorform ist in einer Glasmaschine integriert. Das Einbringen des Tropfens 1 bezeichnet man als Ladung. Anschließend wird die Vorform oberseitig geschlossen, der Tropfen 1 wird über ein geeignetes Presswerkzeug gepresst, der Külbel 3 wird geformt. Nach dem Öffnen der Vorform wird das Külbel 3 entnommen und gedreht und in die Fertigform 4 eingebracht, wo es zur fertigen Flasche 5 aufgeblasen und am Ende entformt wird.

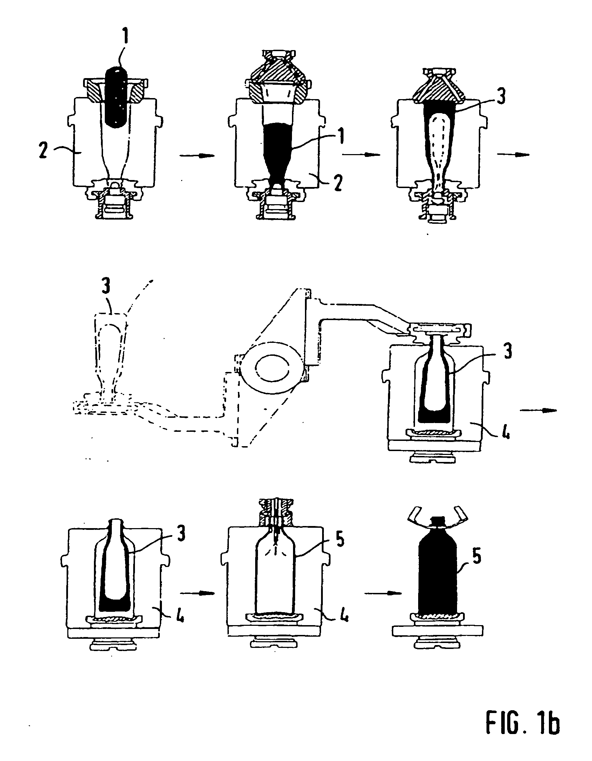

Ähnlich ist der Vorgang beim Blas-Blas-Prozess (Fig. 1b), auch hier fällt der Tropfen 1 in eine Vorform 2. Nach dem Schließen der Vorform wird der Tropfen 1 nicht gepresst, sondern fest geblasen und zum Külbel 3 vorgeblasen. Anschließend wird auch hier das Külbel 3 entnommen, der Fertigform 4 zugeführt und dort fertig geblasen und am Ende entformt.

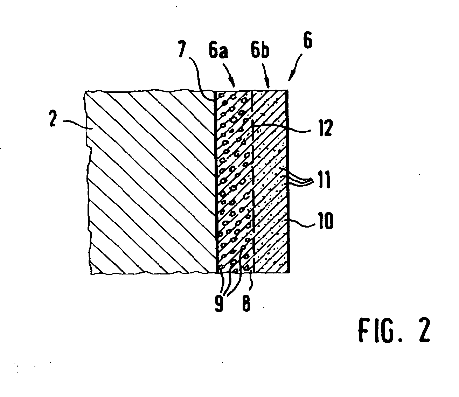

Mitentscheidend für die Fehlerfreiheit der hergestellten Flasche 5 ist insbesondere der Vorformschritt in der Vorform 2. Es muss sichergestellt sein, dass der Tropfen 1, wenn er in die Vorform 2 fällt, in dieser mit minimaler Reibung gleiten und zum Boden rutschen kann. Infolgedessen ist bei einer erfindungsgemäßen Vorform 2, wie sie in Fig. 2 in vergrößerter Darstellung als Teilansicht im Schnitt gezeigt ist, eine Beschichtung 6 vorgesehen, die im gezeigten Beispiel bereits fertig ausgehärtet ist. Sie besteht aus zwei Schichten 6a und 6b, die jeweils unter Verwendung einer speziellen Beschichtungsmasse hergestellt wurden. Die Schicht 6a bildet den sogenannten Base Coat, sie liegt unmittelbar auf der Innenfläche 7 der in der Regel aus Fe bestehenden Vorform 2 auf. Die Beschichtung 6 besteht aus einer Siliconharzmatrix 8, in der ein oxidierter Füllstoff 9, bevorzugt Al₂O₃ eingebunden ist. Die Siliconharzmatrix 8 ist ausgehärtet, bildet also eine Hochtemperaturlackschicht, in der die keramikartigen Füllstoffpartikel 9 eingebunden sind. Die Schicht 6a bildet von ihrer Eigenschaft her eine Keramik- oder keramikartige Schicht.

Auf der Schicht 6a befindet sich die Schicht 6b. Auch diese besteht aus einer Siliconharzmatrix 10. Beide Siliconharzmatrices 8, 10 bestehen bevorzugt aus dem gleichen Siliconharz. In die Siliconharzmatrix 10 ist nun fein verteilt ein Schmierstoff 11 eingebunden, bevorzugt Graphit. An der Schicht 6b liegt der Glastropfen 1 unmittelbar an, er gleitet an dieser entlang, geschmiert durch den Schmierstoff 11. Der Schmierstoff 11 diffundiert beim Härten etwas über die Grenzschicht 12 hinaus in den grenzflächennahen Bereich der Schicht 6a, es ist auch möglich, dass etwas von dem oxidierten Al₂O₃-Füllstoff 9 in die Schicht 6b diffundiert.

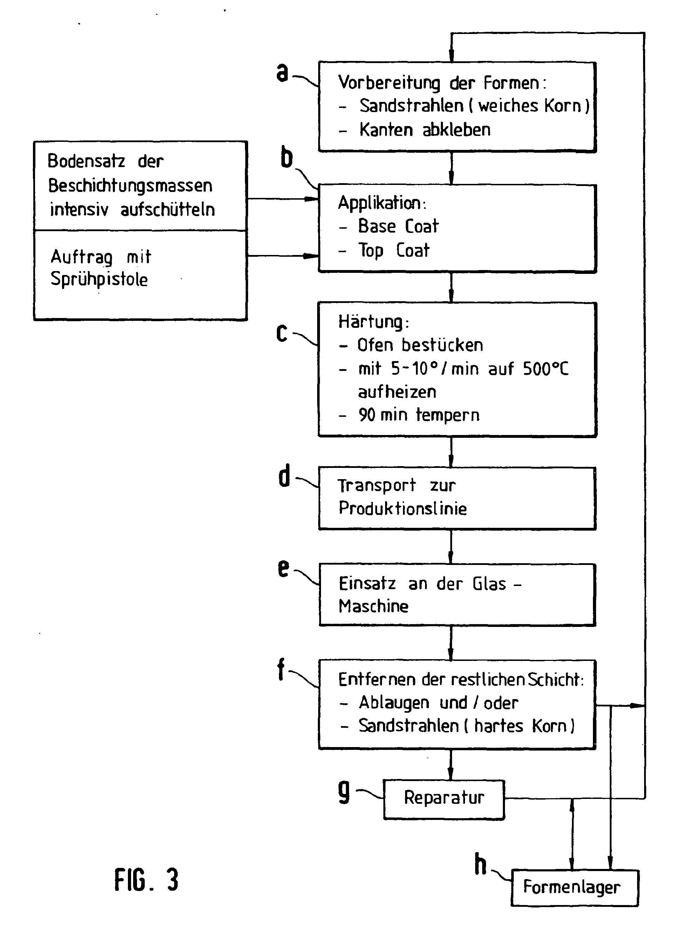

Die Herstellung der Beschichtung 6 ergibt sich aus Fig. 3. Im Schritt a wird eine zu beschichtende Form zunächst gereinigt, was bevorzugt durch Sandstrahlen unter Verwendung eines weichen Korns erfolgt. Das heißt, die zu beschichtende Innenfläche 9 jeder Form wird gereinigt, so dass sie sauber und insbesondere fettfrei ist. Nicht zu beschichtende Formbereiche werden bevorzugt abgeklebt.

Im Schritt b erfolgt die Applikation der beiden Beschichtungsmassen zur Bildung eines Base Coats unter Verwendung einer ersten Beschichtungsmasse und eines Top Coats zur Verwendung einer zweiten Beschichtungsmasse, wobei der Base Coat letztendlich die Schicht 6a und der Top Coat letztendlich die Schicht 6b bildet. Die Applikation der Beschichtungsmassen, die hinreichend flüssig sind, erfolgt unter Verwendung einer handelsüblichen Lackierpistole. Die Innenfläche der Vorform wird gleichmäßig mit der ersten Beschichtungsmasse zur Bildung des Base Coats mit einer Schichtstärke von bevorzugt 60 - 80µm eingesprüht, wobei zweckmäßigerweise der Auftrag in zwei übereinander liegenden, nacheinander applizierten Schichten der beschriebenen Schichtstärke erfolgen sollte. Lackierfehler wie Läufer oder raue Stellen sollten vermieden werden.

Nach einem leichten Antrocknen der aufgebrachten Beschichtungslage wird die zweite Beschichtungsmasse zur Bildung des Top Coats aufgesprüht, auch dies kann in zwei Lagen erfolgen.

Im Schritt c erfolgt nun die Härtung der aufgebrachten Schichten. Die besprühten Formen werden in einen Einbrennofen gegeben, der beim Einbringen der Formen bevorzugt Raumtemperatur, maximal aber ca. 150°C heiß sein sollte, um einen zu hohen Temperatursprung zu vermeiden. Nach dem Einbringen wird der Ofen mit einer Rate von 5 - 10°C/min auf ca. 500°C als Haltetemperatur aufgeheizt, bei welcher Temperatur die Formen für bevorzugt 90 min eingebrannt bzw. getempert werden. Hierbei dampft das Lösungsmittel, das zur Verflüssigung der Beschichtungsmassen dient, vollständig ab, die jeweiligen Einzelschichten bilden die jeweilige Siliconharzmatrix 8, 10 aus, der Füllstoff der Schicht 6a wird oxidiert. Diese Oxidation erfolgt allein über den in der Ofenatmosphäre befindlichen Luftsauerstoff, so dass sich die oxidierten Füllstoff-Partikel 9 bilden.

Nach Beendigung des Schritts c werden die Formen dem Ofen entnommen und im Schritt d zur Produktionslinie transportiert, wo sie im Schritt e in die Glasmaschine, bei der es sich um eine sogenannte IS-Maschine (IS = Independend Section) handeln kann, eingesetzt werden.

Aufgrund der erfindungsgemäßen Beschichtung der Vorformen ist ein häufig wiederholtes Beschichten während des Einsatzes einer Vorform anders als im Stand der Technik bei der manuellen Schmierung nicht erforderlich. Eine erfindungsgemäße Vorform kann mehrere Stunden, je nach Anwendungsfall sogar bis zu 100 Stunden und mehr, eingesetzt werden. Stellt sich heraus, dass eine Vorform zu ersetzen ist, was anhand der Güte der mit ihr produzierten Flaschen erfasst werden kann, wird die Vorform im Schritt f der Maschine entnommen und die noch in ihr befindliche Beschichtung 6 durch Ablaugen und/oder Sandstrahlen unter Verwendung eines harten Korns entfernt. Im Schritt g erfolgt gegebenenfalls eine Formreparatur, wonach diese Form entweder in das Formenlager im Schritt h gegeben oder unmittelbar dem Schritt a zugeführt werden kann, gleichermaßen kann natürlich aus dem Formenlager eine vorzubereitende Form geholt werden. Ist eine Reparatur nicht erforderlich, kann die im Schritt f behandelte Vorform auch unmittelbar dem Schritt a oder dem Formenlager zugeführt werden.

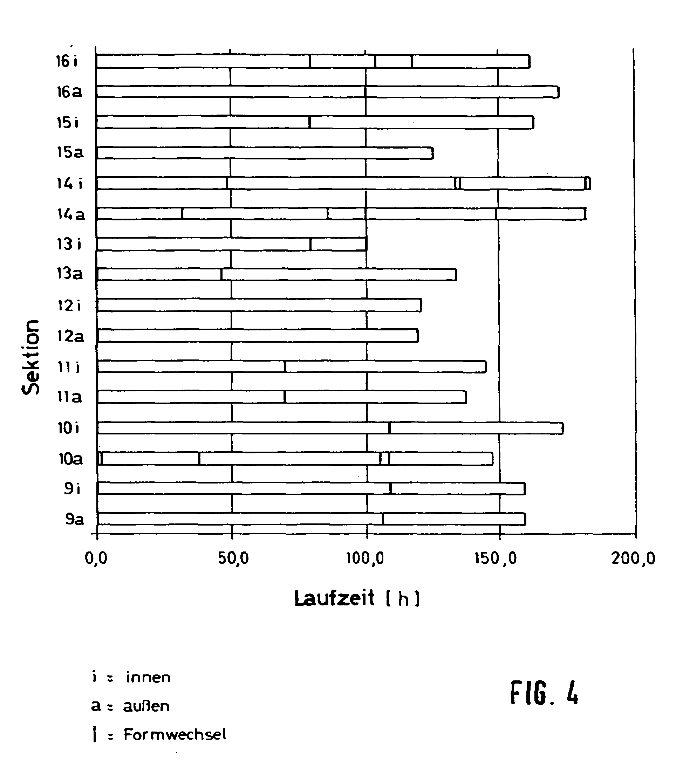

Die Fig. 4 zeigt ein Diagramm, aus dem die Standfestigkeit erfindungsgemäß beschichteter Vorformen deutlich wird. Insgesamt wurden sechzehn Vorformen an einer Glasmaschine verwendet, bei der es sich um eine 6 ¼" Doppeltropfen IS-Maschine (halbe Tandem) mit acht Stationen handelt. Hergestellt wurden 750 ml Bordeaux-Flaschen im Blas-Blas-Verfahren mit einem Gewicht von 450g.

Die verwendeten Vorformen wurden mit einem Beschichtungsmaterial folgender Zusammensetzung beschichtet:

### Erste Beschichtungsmasse zur Bildung der Schicht 6a (Base Coat)

26,3g Siliconharzgranulat (langkettiges phenylmodifiziertes Siliconharz) wurden in 33,2g Butylacetat als Lösungsmittel gelöst. Nach vollständigem Auflösen des Siliconharzgranulats wurden 40,5g Al-Pulver (Korngröße <20 µm) zugegeben und durch einen Rührer homogenisiert.

### Zweite Beschichtungsmasse zur Bildung der Schicht 6b (Top Coat)

23,8g Siliconharzgranulat (langkettiges phenylmodifiziertes Siliconharz) wurden in 23,8g Butylacetat und 28,6g Butylglycol gelöst. Nach vollständigem Auflösen des Siliconharzgranulats wurden 23,8g Graphit (feines Pulver, Korngröße <15 µm) zugegeben und durch Schütteln homogenisiert.

Die Beschichtungsmassen wurden durch Aufsprühen auf die Vorformen appliziert. Die erste Beschichtungsmasse wurde in zwei übereinander liegenden Schichten mit einer Schichtdicke von ca. 60 - 80µm aufgetragen, die zweite Beschichtungsmasse einfach mit einer Schichtdicke von ca. 60 - 80 µm.

Anschließend wurden beide Schichten thermisch in einem Ausheizofen bei 500°C für 90 Minuten gehärtet. Nach Beendigung der Aushärtung wurden die Formen in einem Vorwärmofen vorgewärmt und anschließend in die Maschine eingesetzt.

Wie sich aus Fig. 4 anhand der die Standzeit der Formen in der jeweiligen Sektion zeigenden Balken ergibt, zeigten annähernd alle verwendeten Vorformen Standzeiten im Bereich mehrerer Stunden, teilweise wurden auch extreme Standzeiten von über 100 Stunden erreicht, bis die Vorform abgenutzt war. Die Standzeit einer Form ergibt sich anhand der Länge des jeweiligen Balkenabschnitts, die Vertikalstriche, die einen Balkenabschnitt begrenzen, zeigen einen Formwechsel an. Eine abgenutzte Vorform - was durch Kontrolle der mit ihr hergestellten Flaschen überprüft wurde - wurde gegen eine neue, gleichermaßen erfindungsgemäß beschichtete Vorform ausgetauscht. Fig. 4 zeigt anschaulich den Verlauf der Standzeiten, wobei maximal 200 Stunden aufgetragen sind. Die jeweiligen Balkendiagramme zeigen nur die Standzeiten der Vorformen an, die sich innerhalb der maximalen Laufzeit von 200 Stunden abgenutzt haben. Vorformen, die vor dem Ablauf der 200 Betriebsstunden eingesetzt wurden, jedoch bis dahin noch nicht abgenutzt waren, sind nicht dargestellt.

Nachfolgend wird in der Tabelle 1 eine Aufstellung der Laufzeiten (angegeben in vollen Stunden) der einzelnen Vorformen, bezogen auf die jeweiligen Sektionen, wiedergegeben. Annähernd alle verwendeten Vorformen erreichten wie beschrieben sehr lange Standzeiten, die wenigen Vorformen, die bereits nach äußerst kurzer Standzeit von ≤3 Stunden ausgetauscht wurden, nahmen in der Regel aufgrund anderweitiger Einflüsse, vornehmlich aus der Tropfenzufuhr herrührend, Schaden und mussten ausgetauscht werden.

**Tabelle 1**

| Sektion | erste Vorform | zweite Vorform | dritte Vorform | vierte Vorform | fünfte Vorform |
|---|---|---|---|---|---|
| 9a | 106 | 54 | | | |
| 9i | 109 | 51 | | | |
| 10a | 2 | 37 | 67 | 3 | 39 |
| 10i | 109 | 65 | | | |
| 11a | 70 | 68 | | | |
| 11i | 70 | 75 | | | |
| 12a | 120 | | | | |
| 12i | 121 | | | | |
| 13a | 47 | 88 | | | |
| 13i | 80 | 21 | | | |
| 14a | 32 | 54 | 14 | 49 | 33 |
| 14i | 49 | 85 | 2 | 47 | 1 |
| 15a | 126 | | | | |
| 15i | 80 | 83 | | | |
| 16a | 101 | 72 | | | |
| 16i | 80 | 24 | 14 | 43 | |

In Fig. 4 wie auf der Tabelle 1 wies jede Station zwei Sektionen auf, die in der Figur wie der Tabelle in "a" (= außen) und "i" (= innen) unterschieden sind. Dargestellt sind also die Sektionen 9a - 16i. Auf den Sektionen 1a - 8i wurden zu Vergleichszwecken - worauf nachfolgend noch eingegangen wird - Vorformen verwendet, die wie im Stand der Technik manuell zyklisch mit einem Schmiermittel auf Mineralölbasis geschmiert wurden.

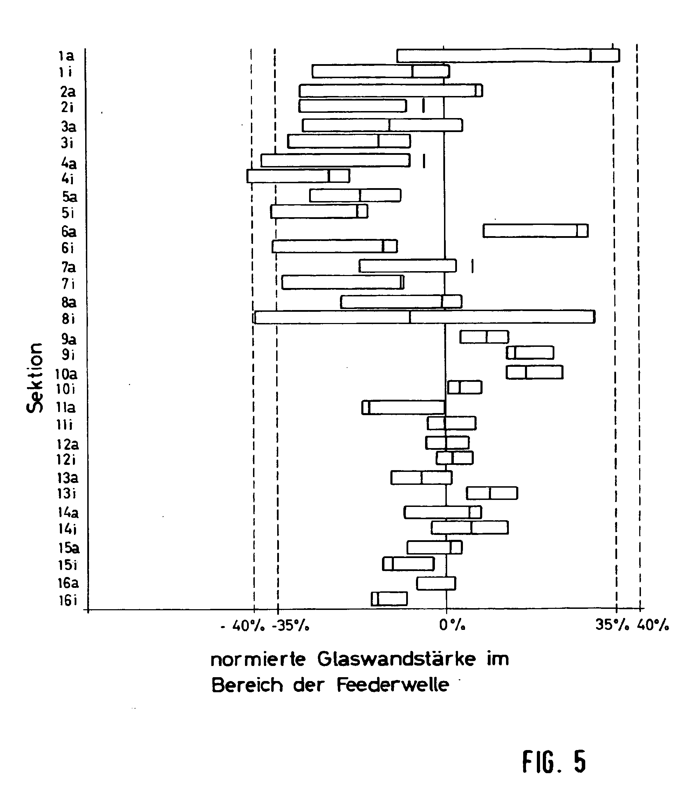

Fig. 5 zeigt in Form eines Diagramms die Vorform-bezogenen Werte der Glasdicke der hergestellten Flaschen im Bereich der Feederwelle, also einem Bereich am Flaschenbauch. Die jeweiligen Dicken wurden unter Verwendung eines "XPAR"-Kamerasystems einem Heißendprüfgerät, erfasst. Diese Heißendprüfung ermöglicht eine kontinuierliche Erfassung der Wandstärke über die Temperaturstrahlung des noch heißen Gegenstandes. Dargestellt sind die Intervalle der Glasdicken von jeweils 100 im selben Zeitbereich hergestellter Flaschen. Ein Austausch der erfindungsgemäßen Vorformen erfolgte in dieser Zeit nicht. Die auf den Stationen 1 - 8 (und damit den Sektionen 1a - 8i) eingesetzten Vorformen wurden gemäß dem Stand der Technik in diesem Zeitraum einmal mit einem Schmiermittel auf Mineralölbasis mit Graphit manuell unter Verwendung einer Bürste geschmiert.

Längs der Abszisse ist bei 0% der Sollwert angegeben, nach links und rechts ergeben sich die jeweiligen prozentualen Abweichungen. Je kürzer ein Balken ist, desto geringer die Intervallabweichung über die 100 Flaschen. Die Darstellung ist normiert.

Ersichtlich zeigt sich, dass die Glaswandstärke bei Verwendung der erfindungsgemäßen Vorformen wesentlich gleichmäßiger und homogener ist, als bei Verwendung der gemäß dem Stand der Technik geschmierten Vorformen, wo sich zum Teil extreme Schwankungen ergeben. Das heißt, dass unter Verwendung der erfindungsgemäßen Vorformen nicht nur ein über sehr lange Zeit kontinuierlicher Betrieb möglich ist, es können auch Erzeugnisse hoher Gleichmäßigkeit erhalten werden.

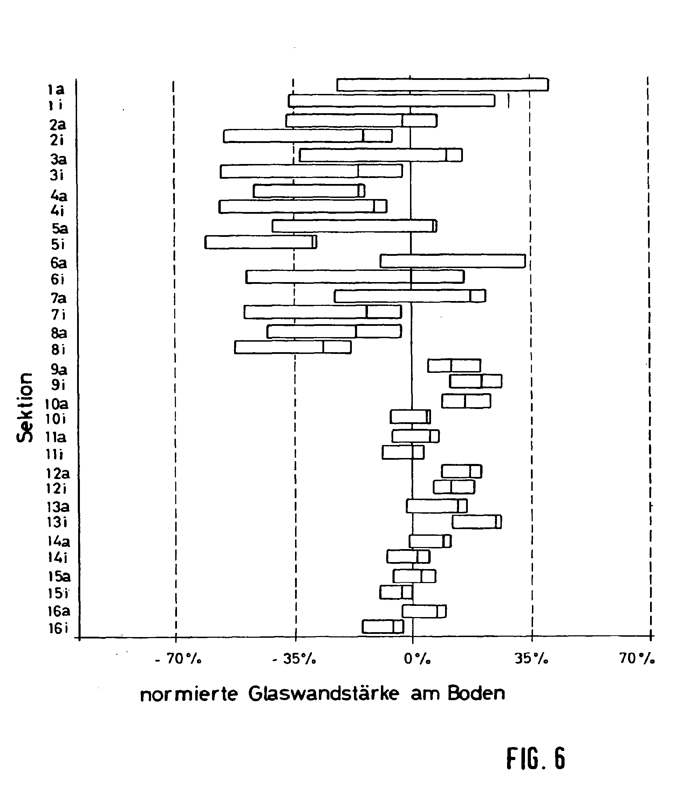

Fig. 6 zeigt eine Darstellung ähnlich der gemäß Fig. 5, jedoch ist hier die Glaswandstärke im Bereich des Flaschenbodens dargestellt. Auch hier zeigt sich in sehr deutlicher Weise, dass die Wandstärkenschwankungen bei Verwendung der erfindungsgemäßen Formen sehr gering sind im Vergleich zur Verwendung der manuell geschmierten Vorformen. Dies liegt wie beschrieben eben daran, dass durch die lange Standzeit der Form eine höhere Prozessstabilität gegeben ist.

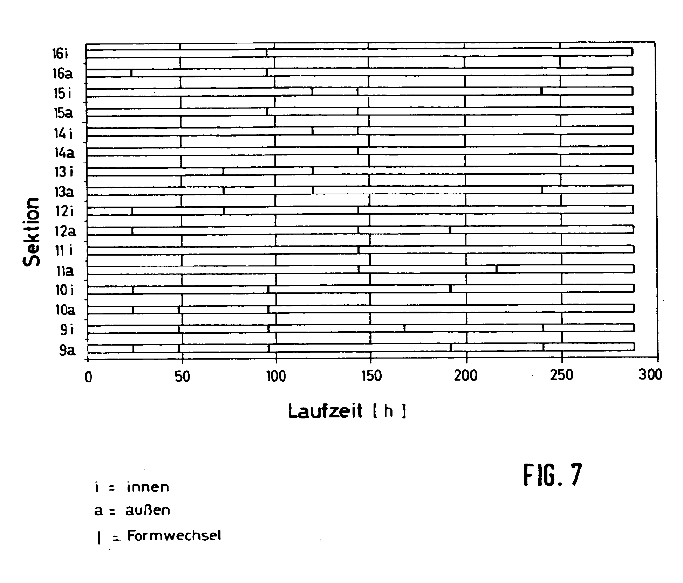

Schließlich zeigt Fig. 7 ein weiteres, der Darstellung aus Fig. 4 entsprechendes Diagramm, dem die Laufzeit erfindungsgemäßer Vorformen zu entnehmen ist. Auch hier wurde eine 250ml Schlegel-Flasche in einem Enghals-Press-Blas-Verfahren mit einem Gewicht von 155g auf einer 6 ¼" Doppeltropfen-IS-Maschine (halbe Tandem) mit acht Stationen hergestellt. Die verwendeten Vorformen wurden unter Verwendung der Beschichtungsmaterialien, wie sie bereits bezüglich der Vorformen aus Fig. 4 beschrieben wurden, beschichtet. Der Betrieb war auf 12 Produktionstage mit einer Laufzeit von insgesamt 288 Stunden angelegt und wurde mit dem Ablauf der maximalen Laufzeit abgebrochen, auch wenn die verwendeten Vorformen zu diesem Zeitpunkt noch nicht abgenutzt waren. Die Länge der Balkenabschnitte gibt auch hier die Standzeit der jeweiligen Form an, die Vertikalstriche zeigen den Formwechsel an.

Wie der nachfolgenden Tabelle 2 zu entnehmen ist, ergaben sich auch hier sehr lange, zum Teil extrem lange Laufzeiten (in Stunden) mit weit über 100 Stunden Standzeit.

**Tabelle 2**

| Sektion | Erste Vorform | zweite Vorform | Dritte Vorform | vierte Vorform | fünfte Vorform |
|---|---|---|---|---|---|
| 9a | 24 | 24 | 48 | 48 | 48 |
| 9i | 48 | 48 | 72 | 48 | |
| 10a | 24 | 24 | 48 | | |
| 10i | 24 | 72 | 96 | | |
| 11a | 144 | 72 | 72 | | |
| 11i | 144 | 144 | | | |
| 12a | 24 | 120 | 48 | | |
| 12i | 24 | 48 | 72 | | |
| 13a | 72 | 48 | 120 | | |
| 13i | 72 | 48 | 168 | | |
| 14a | 144 | 144 | | | |
| 14i | 120 | 24 | 144 | | |
| 15a | 96 | 48 | 144 | | |
| 15i | 120 | 24 | 96 | | |
| 16a | 24 | 72 | 192 | | |
| 16i | 96 | 192 | | | |

Die Beispiele gemäß der Fig. 4 - 7 zeigen, dass die erfindungsgemäßen Vorformen zum einen eine lange Standzeit aufweisen, zum andere diese Standzeiten auch bei Herstellung unterschiedlicher Hohlglasgegenstände erreicht werden. Im Vergleich zum bisherigen Stand der Technik der manuellen Schmierung lässt sich zum einen ein über lange Zeit kontinuierlicher Betrieb realisieren, zum anderen kann der häufige und aufwändige manuelle Schmierprozess entfallen. Im Vergleich zur das Cr₂O₃ als Oxidationsmittel enthaltenden Beschichtung ist die erfindungsgemäße Beschichtung ohne Probleme herstell- und verarbeitbar.

## Patentansprüche

1. Beschichtungsmaterial für eine Glasform (2), insbesondere eine Glasvorform, bestehend aus
a) einer direkt auf die Glasform aufzubringenden ersten Beschichtungsmasse enthaltend
- ein bei gegenüber Raumtemperatur erhöhter Temperatur aushärtbares Bindemittel auf Siliconharzbasis zur Bildung einer Siliconharzträgerschicht, und
- einen während der Aushärtung oxidierbaren, in die Siliconharzmatrix einzubindenden Füllstoff, der nach der Oxidation einen keramischen Bestandteil in der aus der ersten Beschichtungsmasse gebildeten keramikartigen Schicht bildet,
- wobei das Bindmittel und der Füllstoff in einem Lösungsmittel gelöst bzw. suspendiert sind, und aus
b) einer auf die erste Beschichtungsmasse aufzubringenden zweiten Beschichtungsmasse enthaltend
- ein bei gegenüber Raumtemperatur erhöhter Temperatur aushärtbares Bindemittel auf Siliconharzbasis zur Bildung einer Siliconharzträgerschicht und
- einen bei der Aushärtung in die Siliconharzträgerschicht einzubindenden, bezüglich der mit dieser Beschichtungslage in Kontakt kommenden Glasmasse schmierend wirkenden Schmierstoff,
- wobei das Bindmittel und der Schmierstoff in einem Lösungsmittel gelöst bzw. suspendiert sind.

2. Beschichtungsmaterial nach Anspruch 1, **dadurch gekennzeichnet, dass** der Füllstoff Aluminium-Pulver ist.

3. Beschichtungsmaterial nach Anspruch 1 oder 2, **dadurch gekennzeichnet, dass** der Schmierstoff Graphit, MoS₂, BN oder Flammruß ist.

4. Beschichtungsmaterial nach einem der vorangehenden Ansprüche, **dadurch gekennzeichnet, dass** das Lösungsmittel der ersten Beschichtungsmasse Butylacetat ist.

5. Beschichtungsmaterial nach einem der vorangehenden Ansprüche, **dadurch gekennzeichnet, dass** das Lösungsmittel der zweiten Beschichtungsmasse Butylacetat oder eine Mischung aus Butylacetat und Butylglycol ist.

6. Beschichtungsmaterial nach einem der vorangehenden Ansprüche, **dadurch gekennzeichnet, dass** die erste Beschichtungsmasse bezogen auf 100g enthält:
- Bindemittel 15 - 35g
- Füllstoff 23,5 - 53,5g
- Rest Lösungsmittel,
und dass die zweite Beschichtungsmasse bezogen auf 100g enthält:
- Bindemittel 15 - 35g
- Schmierstoff 15 - 35g
- Rest Lösungsmittel

7. Beschichtungsmaterial nach Anspruch 6, **dadurch gekennzeichnet, dass** die erste Beschichtungsmasse bezogen auf 100g enthält:
- Bindemittel 20 - 30g
- Füllstoff 30 - 45g
- Rest Lösungsmittel,
und dass die zweite Beschichtungsmasse bezogen auf 100g enthält:
- Bindemittel 20 - 30g
- Schmierstoff 20 - 30g
- Rest Lösungsmittel

8. Beschichtungsmaterial nach Anspruch 7, **dadurch gekennzeichnet, dass** die erste Beschichtungsmasse bezogen auf 100g enthält:
- Bindemittel 23 - 28g
- Füllstoff 35 - 43g
- Rest Lösungsmittel,
und dass die zweite Beschichtungsmasse bezogen auf 100g enthält:
- Bindemittel 22 - 27g
- Schmierstoff 22 - 27g
- Rest Lösungsmittel

9. Beschichtungsmaterial nach Anspruch 8, **dadurch gekennzeichnet, dass** die erste Beschichtungsmasse bezogen auf 100g enthält:
- Bindemittel 26,3g
- Füllstoff 40,5g
- Rest Lösungsmittel,
und dass die zweite Beschichtungsmasse bezogen auf 100g enthält:
- Bindemittel 23,8g
- Schmierstoff 23,8g
- Rest Lösungsmittel

10. Beschichtungsmaterial nach einem der vorangehenden Ansprüche, **dadurch gekennzeichnet, dass** die erste und/oder die zweite Beschichtungsmasse einen gelösten oder suspendierten Farbstoff enthält.

11. Verfahren zum Beschichten einer Glasform (2), insbesondere einer Glasvorform, unter Verwendung des Beschichtungsmaterials nach einem der Ansprüche 1 bis 10, mit folgenden Schritten:
- Bildung einer ersten Schicht durch Auftragen der ersten Beschichtungsmasse auf die Formwand,
- Bildung einer zweiten Schicht durch Auftragen der zweiten Beschichtungsmasse auf die Schicht der ersten Beschichtungsmasse,
- Aushärten der Beschichtungsmassen zur Bildung der Beschichtung durch Einbrennen der Form (2), wobei die Form (2) bei einer Haltetemperatur von mindestens 500°C für mindestens 60 min ausgeheizt wird, derart, dass ein in der ersten Beschichtungsmasse enthaltener oxidierbarer Füllstoff während der Aushärtung oxidiert wird und einen keramischen Bestandteil in der aus der ersten Beschichtungsmasse gebildeten keramikartigen Schicht bildet.

12. Verfahren nach Anspruch 11, **dadurch gekennzeichnet, dass** die erste und/oder die zweite Schicht durch zweimaliges Auftragen der ersten und/oder zweiten Beschichtungsmasse gebildet wird.

13. Verfahren nach Anspruch 11 oder 12, **dadurch gekennzeichnet, dass** die erste Beschichtungsmasse und die zweite Beschichtungsmasse, gegebenenfalls im jeweiligen Auftrag, in einer Schichtstärke zwischen 40 - 150 µm, insbesondere zwischen 50 - 100 µm, vorzugsweise zwischen 60 - 80 µm aufgetragen wird.

14. Verfahren nach einem der Ansprüche 11 bis 13, **dadurch gekennzeichnet, dass** die Beschichtungsmassen aufgesprüht werden.

15. Verfahren nach einem der Ansprüche 11 bis 14, **dadurch gekennzeichnet, dass** die erste Schicht vor dem Auftragen der zweiten Schicht antrocknet.

16. Verfahren nach einem der Ansprüche 11 bis 15, **dadurch gekennzeichnet, dass** die aufgebrachten Schichten vor dem Einbrennen der Form (2) antrocknen.

17. Verfahren nach einem der Ansprüche 11 - 16, **dadurch gekennzeichnet, dass** der Ofen in dem eine Form (2) ausgeheizt wird ausgehend von der Temperatur beim Einbringen der Form (2) mit einer Rate von 5 - 10 °C/min auf die Haltetemperatur aufgeheizt wird.

18. Verfahren nach Anspruch 17, **dadurch gekennzeichnet, dass** die Temperatur beim Einbringen der Formen (2) maximal 200°C, insbesondere maximal 150°C beträgt.

19. Verfahren nach einem der Ansprüche 11 - 18, **dadurch gekennzeichnet, dass** die Form vor dem Auftragen der ersten Beschichtungsmasse gereinigt wird.

20. Verfahren nach Anspruch 19, **dadurch gekennzeichnet, dass** die Form sandgestrahlt wird, insbesondere unter Verwendung eines weichen Korns.

21. Verfahren nach einem der Ansprüche 11 bis 20, **dadurch gekennzeichnet, dass** die Form nach dem Entfernen aus der Glasmaschine gereinigt wird.

22. Verfahren nach Anspruch 21, **dadurch gekennzeichnet, dass** die Form abgelaugt und/oder sandgestrahlt wird, insbesondere unter Verwendung eines harten Korns.

23. Glasform (2), insbesondere Glasvorform, mit einer unmittelbar auf der Innenfläche (7) der Glasform (2) vorgesehenen keramikartigen Schicht (6a) bestehend aus einer ausgehärteten Silikonharzmatrix (8) mit einem eingebetteten oxidierten Füllstoff (9), vorzugsweise Al₂O₃, sowie einer auf der ersten Schicht (6a) vorgesehenen zweiten Schicht (6c) bestehend aus einer ausgehärteten Silikonharzmatrix (10) mit darin eingebundene, fein verteiltem Schmierstoff (11), vorzugsweise Graphit.

## Claims

1. A coating material-for a glass mould (2), in particular, a glass blank mould, consisting of:
a) a first coating compound to be applied directly to the glass mould, containing:
- a binding agent based on silicon resin capable of hardening at a raised temperature by comparison with room temperature for the formation of a silicon-resin carrier coat , and
- a filling agent oxidisable during the hardening, to be bound into the silicon-resin matrix, which, after the oxidation, forms a ceramic component in the ceramic-like coat formed from the first coating compound,
- wherein the binding agent and the filling agent are dissolved or suspended in a solvent, and of
b) a second coating compound to be applied onto the first coating compound, containing:
- a binding agent based on silicon resin capable of hardening at a raised temperature by comparison with room temperature for the formation of a silicon-resin carrier coat and
- a lubricating agent to be bound into the silicon-resin carrier coat during the hardening, acting in a lubricating manner with regard to the glass compound coming into contact with this coating layer,
wherein the binding agent and the lubricating agent are dissolved or suspended in a solvent.

2. The coating material according to claim 1,
**characterised in that**
the filling agent is aluminium powder.

3. The coating material according to claim 1 or 2,
**characterised in that**
the lubricating agent is graphite, MoS₂, BN or flame soot.

4. The coating material according to any one of the preceding claims,
**characterised in that**
the solvent of the first coating compound is butyl acetate.

5. The coating material according to any one of the preceding claims,
**characterised in that**
the solvent of the second coating compound is butyl acetate or a mixture of butyl acetate and butyl glycol.

6. The coating material according to any one of the preceding claims,
**characterised in that**
with reference to 100 g, the first coating compound contains:
- binding agent 15 - 35 g
- filling agent 23.5 - 53.5 g
- remainder solvent
and that, with reference to 100 g, the second coating compound contains:
- binding agent 15 - 35 g
- lubricating agent 15 - 35 g
- remainder solvent.

7. The coating material according to claim 6,
**characterised in that**,
with reference to 100 g, the first coating compound contains:
- binding agent 20 - 30 g
- filling agent 30 - 4-5 g
- remainder solvent
and that, with reference to 1-00 g, the second coating compound contains:
- binding agent 20 - 30 g
- lubricating agent 20 - 30 g
- remainder solvent.

8. The coating material according to claim 7,
**characterised in that**,
with reference to 100 g, the first coating compound contains:
- binding agent 23 - 28 g
- filling agent 35 - 43 g
- remainder solvent
and that, with reference to 100 g, the second coating compound contains:
- binding agent 22 - 27 g
- lubricating agent 22 - 27 g
- remainder solvent.

9. The coating material according to claim 8,
**characterised in that**,
with reference to 100 g, the first coating compound contains:
- binding agent 26.3 g
- filling agent 40.5 g
- remainder solvent
and that, with reference to 100 g, the second coating compound contains:
- binding agent 23.8 g
- lubricating agent 23.8 g
- remainder solvent.

10. The coating material according to any one of the preceding claims,
**characterised in that**
the first and/or the second coating compound contains a dissolved or suspended colouring agent.

11. A method for coating a glass mould (2), in particular, a glass blank mould, using the coating material according to any one of claims 1 to 10, with the following steps:
- formation of a first coat through the application of the first coating compound to the mould wall,
- formation of a second coat through the application of the second coating compound to the coat of the first coating compound,
- hardening of the coating compounds for the formation of the coating by stoving the mould (2),
wherein the mould (2) is heated at a holding temperature of at least 500°C for at least 60 minutes, in such a manner that the oxidisable filling agent contained in the first coating compound is oxidised during the hardening and forms a ceramic component in the ceramic-like coat formed from the first coating compound.

12. The method according to claim 11,
**characterised in that**
the first and/or the second coat is formed by double application of the first and/or second coating compound.

13. The method according to claim 11 or 12,
**characterised in that**
the first coating compound-and the second coating compound, optionally within the respective application, is applied in a coat thickness between 40-150 µm, in particular, between 50-100 µm, preferably between 60-80 µm.

14. The method according to any one of claims 11 to 13,
**characterised in that**
the coating compounds are sprayed on.

15. The method according to any one of claims 11 to 14,
**characterised in that**
the first coat begins to dry before the application of the second coat.

16. The method according to any one of claims 11 to 15,
**characterised in that**
the applied coats begin to dry before the stoving of the mould (2).

17. The method according to any one of claims 11 - 16,
**characterised in that**
the stove, in which a mould (2) is heated, is heated up to the holding temperature, starting from the temperature at the introduction of the mould (2), at a rate of 5-10°C/min.

18. The method according to claim 17,
**characterised in that**
the temperature at the introduction of the moulds (2) is a maximum of 200°C, in particular, a maximum of 150°C.

19. The method according to any one of claims 11 - 18,
**characterised in that**
the mould is cleaned before the application of the first coating compound.

20. The method according to claim 19,
**characterised in that**
the mould is sandblasted, in particular, using a soft grain.

21. The method according to any one of claims 11 to 20,
**characterised in that**
the mould is cleaned after the removal from the glass machine.

22. The method according to claim 21,
**characterised in that**
the mould is leached out and/or sandblasted, in particular, using a hard grain.

23. A glass mould (2), in particular, a glass blank mould, with a ceramic-like coat (6a) provided directly on the internal surface (7) of the glass mould (2) consisting of a hardened silicon-resin matrix (8) with an embedded, oxidised filling agent_ (9), preferably Al₂O₃, and with a second coat (6c) provided on the first coat (6a) consisting of a hardened silicon-resin matrix (10) with finely-distributed lubricating agent (11), preferably graphite, bound into the latter.

## Revendications

1. Matériau de revêtement pour un moule verrier (2), en particulier un moule verrier de préformage, consistant en
a) un premier matériau de revêtement à appliquer directement sur le moule verrier, contenant
- un liant à base de résine de silicone durcissable à température supérieure à la température ambiante pour la formation d'une couche support de résine de silicone et
- une charge oxydable pendant le durcissement, à intégrer dans la matrice de résine de silicone qui, après l'oxydation, forme un composant céramique dans la couche de nature céramique formée en le premier matériau de revêtement,
- sachant que le liant et la charge sont dissous, respectivement suspendus, dans un solvant, et en
b) un deuxième matériau de revêtement à appliquer sur le premier matériau de revêtement, contenant
- un liant à base de résine de silicone durcissable à température supérieure à la température ambiante pour la formation d'une couche support de résine de silicone et
- un matériau lubrifiant à intégrer dans la couche support de résine de silicone lors du durcissement, à effet de lubrification envers la masse de verre venant en contact avec cette couche de revêtement,
- sachant que le liant et le lubrifiant sont dissous, respectivement suspendus, dans un solvant.

2. Matériau de revêtement selon la revendication 1, **caractérisé en ce que** la charge est de la poudre d'aluminium.

3. Matériau de revêtement selon la revendication 1 ou 2, **caractérisé en ce que** le lubrifiant est du graphite, du MoS₂, du BN ou du noir de fumée.

4. Matériau de revêtement selon l'une quelconque des revendications précédentes, **caractérisé en ce que** le solvant du premier matériau de revêtement est de l'acétate de butyle.

5. Matériau de revêtement selon l'une quelconque des revendications précédentes, **caractérisé en ce que** le solvant du deuxième matériau de revêtement est de l'acétate de butyle ou un mélange d'acétate de butyle et de butylglycol.

6. Matériau de revêtement selon l'une quelconque des revendications précédentes, **caractérisé en ce que** le premier matériau de revêtement contient, rapporté à 100 g :
- du liant : 1 5 à 35 g
- de la charge : 23,5 à 53,5 g
- le reste étant du solvant,
et que le deuxième matériau de revêtement contient, rapporté à 100 g :
- du liant : 15 à 35 g
- du lubrifiant : 15 à 35 g
- le reste étant du solvant.

7. Matériau de revêtement selon la revendication 6, **caractérisé en ce que** le premier matériau de revêtement contient, rapporté à 100 g :
- du liant : 20 à 30 g
- de la charge : 30 à 45 g
- le reste étant du solvant,
et que le deuxième matériau de revêtement contient, rapporté à 100 g :
- du liant : 20 à 30 g
- du lubrifiant : 20 à 30 g
- le reste étant du solvant.

8. Matériau de revêtement selon la revendication 7, **caractérisé en ce que** le premier matériau de revêtement contient, rapporté à 100 g :
- du liant : 23 à 28 g
- de la charge : 35 à 43 g
- le reste étant du solvant,
et que le deuxième matériau de revêtement contient, rapporté à 100 g :
- du liant : 22 à 27 g
- du lubrifiant : 22 à 27 g
- le reste étant du solvant.

9. Matériau de revêtement selon la revendication 8, **caractérisé en ce que** le premier matériau de revêtement contient, rapporté à 100 g :
- du liant : 26,3 g
- de la charge : 40,5 g
- le reste étant du solvant,
et que le deuxième matériau de revêtement contient, rapporté à 100 g :
- du liant : 23,8 g
- du lubrifiant : 23,8 g
- le reste étant du solvant.

10. Matériau de revêtement selon l'une quelconque des revendications précédentes, **caractérisé en ce que** le premier et/ou le deuxième matériau de revêtement contiennent un colorant dissous ou suspendu.

11. Procédé pour revêtir un moule verrier (2), en particulier un moule verrier de préformage, moyennant l'utilisation du matériau de revêtement selon l'une quelconque des revendications 1 à 10, avec les étapes suivantes :
- formation d'une première couche par application du premier matériau de revêtement sur la paroi du moule,
- formation d'une deuxième couche par application du deuxième matériau de revêtement sur la couche du premier matériau de revêtement,
- durcissement des matériaux de revêtement par cuisson du moule (2) pour la formation du revêtement, sachant que le moule (2) est chauffé pendant au moins 60 min à une température de maintien d'au moins 500 °C, de telle sorte qu'une charge oxydable contenue dans le premier matériau de revêtement est oxydée pendant le durcissement et forme un composant céramique dans la couche de nature céramique formée à partir du premier matériau de revêtement.

12. Procédé selon la revendication 11, **caractérisé en ce que** la première et/ou la deuxième couche sont formées par double application du premier et/ou du deuxième matériau de revêtement.

13. Procédé selon la revendication 11 ou 12, **caractérisé en ce que** le premier matériau de revêtement et le deuxième matériau de revêtement, le cas échéant dans l'application respective, sont appliqués en une épaisseur de couche comprise entre 40 et 150µm, en particulier entre 50 et 100 µm, de préférence entre 60 et 80 µm.

14. Procédé selon l'une quelconque des revendications 11 à 13, **caractérisé en ce que** les matériaux de revêtement sont appliqués par pulvérisation.

15. Procédé selon l'une quelconque des revendications 11 à 14, **caractérisé en ce que** la première couche subit un séchage superficiel avant l'application de la deuxième couche.

16. Procédé selon l'une quelconque des revendications 11 à 15, **caractérisé en ce que** les couches appliquées subissent un séchage superficiel avant la cuisson du moule (2).

17. Procédé selon l'une quelconque des revendications 11 à 16, **caractérisé en ce que** le four dans lequel un moule (2) est chauffé, est réchauffé à la température de maintien à une vitesse de 5 à 10 °C/min, en partant de la température lors de l'introduction du moule (2).

18. Procédé selon la revendication 17, **caractérisé en ce qu'**au moment de l'introduction des moules (2), la température est au maximum de 200 °C, en particulier au maximum de 150 °C.

19. Procédé selon l'une quelconque des revendications 11 à 18, **caractérisé en ce que** le moule est nettoyé avant l'application du premier matériau de revêtement.

20. Procédé selon la revendication 19, **caractérisé en ce que** le moule est sablé, en particulier moyennant l'utilisation d'un grain tendre.

21. Procédé selon l'une quelconque des revendications 11 à 20, **caractérisé en ce qu'**après le retrait depuis la machine à verre, le moule est nettoyé.

22. Procédé selon la revendication 21, **caractérisé en ce que** le moule est décapé par voie basique et/ou sablé, en particulier moyennant l'utilisation d'un grain dur.

23. Moule verrier (2), en particulier moule verrier de préformage, avec une couche de nature céramique (6a) prévue directement sur la surface intérieure (7) du moule (2), consistant en une matrice de résine de silicone (8) durcie, avec une charge (9) oxydée incorporée, de préférence Al₂O₃, ainsi qu'avec une deuxième couche (6c) prévue sur la première couche (6a), consistant en une matrice de résine de silicone (10) durcie, avec un lubrifiant (11) incorporé dedans, finement divisé, de préférence du graphite.
